# EUROPEAN PATENT APPLICATION

(11) **EP 4 269 011 A1**
(43) Date of publication of application: **01.11.2023**
(21) Application number: 22212351.5
(22) Date of filing: 08.12.2022
(51) Int. Cl.: B23H 9/10, B23H 3/00

(54) **PULSED ELECTROCHEMICAL MACHINING OF TURBINE COMPONENTS**

(30) Priority: 28.04.2022 US 202217661230
(71) Applicant: Rolls-Royce Corporation, Indianapolis IN 46225 (US)
(72) Inventor: GARNER, Rusty M., Indianapolis, IN 46225-1103 (US)
(74) Representative: HGF

(57) **Abstract**

A method for pulsed electrochemical machining (pECM) a turbine component, comprising: generating a pulsed direct current between one or more electrodes of a machining tool and the turbine component, wherein the machining tool comprises a tool body defining a tool axis, the tool body comprising the one or more electrodes, each of the one or more electrodes comprising an electrically conductive material and defining a working surface at a distal end of the tool axis configured to face the turbine component; delivering an electrolyte into an interelectrode gap between the working surface of the one or more electrodes and a target surface of the turbine component; and positioning the working surface of the one or more electrodes relative to the target surface of the turbine component to remove material from the target surface of the turbine component.

## Description

### TECHNICAL FIELD

The disclosure relates to pulsed electrochemical machining (pECM).

### BACKGROUND

Machining processes may involve removal of material from a workpiece to form a component having a finished shape and texture. Pulsed electrochemical machining (pECM) is a non-contact machining process based on the principles of electrolysis. Pulsed electrochemical machining may also be referred to as precision electrochemical machining or pulse electrochemical machining. A pECM system may include a tool (the cathode) that imparts its shape into a workpiece (the anode) in a mirror image. As the tool moves toward a surface of the workpiece to be machined, a pulsed DC current may be applied to the tool and the workpiece. The tool maintains a tiny interelectrode gap (e.g., of less than about 10 microns) from the surface of the workpiece, and the workpiece dissolves anodically about the tool, taking on the complementary shape of the tool. An electrolyte pumped between the tool and the workpiece may remove dissolved metal, heat and hydrogen from the working gap.

Since the cathodic tool does not physically contact the anodic workpiece, pECM can produce burr-free three-dimensional shapes with little or no tool wear. pECM may be used to machine any conductive metal or alloy, and is particularly well suited for materials, such as superalloys, that are difficult to machine through conventional methods. Materials commonly machined with pECM include, for example, nickel, iron, and titanium-based alloys in a variety of formats such as cast (including single crystal), forged, additively manufactured, and powdered metallurgy.

### SUMMARY

In some examples, the disclosure describes a pulsed electrochemical machining (pECM) system that includes a pECM tool comprising a tool body defining a tool axis, the tool body comprising one or more electrodes, each of the one or more electrodes comprising an electrically conductive material and defining a working surface at a distal end of the tool axis configured to face a workpiece; an enclosure system configured to hold the workpiece, wherein the enclosure system comprises: a first clamp configured to grip a first end of the workpiece; a second clamp configured to grip a second end of the workpiece; and a backside support configured to support a span of the workpiece between the first end and the second end.

In some examples, the disclosure describes a pulsed electrochemical machining (pECM) method that includes gripping a first end of the workpiece; gripping a second end of the workpiece; supporting a span of the workpiece that extends between the first end and the second end; generating a pulsed direct current between one or more electrodes of a machining tool and the workpiece, wherein the machining tool comprises a tool body defining a tool axis, the tool body comprising the one or more electrodes, each of the one or more electrodes comprising an electrically conductive material and defining a working surface at a distal end of the tool axis configured to face the workpiece; delivering an electrolyte into an interelectrode gap between the working surface of the one or more electrodes and a target surface of the workpiece; and positioning the working surface of the one or more electrodes relative to the target surface of the workpiece to remove material from the target surface of the workpiece.

The details of one or more examples are set forth in the accompanying drawings and the description below. Other features, objects, and advantages will be apparent from the description and drawings, and from the claims.

### BRIEF DESCRIPTION OF DRAWINGS

FIG. 1A is a conceptual block diagram illustrating a pulsed electrochemical machining (pECM) system, in accordance with one or more aspects of this disclosure.
FIG. 1B is a side view cross-sectional conceptual diagram illustrating operation of a pECM tool of the pECM system of FIG. 1A, in accordance with one or more aspects of this disclosure.
FIG. 1C is a side view cross-sectional conceptual diagram illustrating a magnified view of a portion of FIG. 1B, in accordance with one or more aspects of this disclosure.
FIG. 1D is a conceptual block diagram illustrating an example control system of the pECM system of FIG. 1A, in accordance with one or more aspects of this disclosure.
FIG. 1E is a flow diagram illustrating an example technique for controlling the pECM system of FIG. 1A, in accordance with one or more aspects of this disclosure.
FIG. 2 shows a cut away view of an exemplary tip portion of an airfoil with dual wall cooling structure for a gas turbine engine, in accordance with one or more aspects of this disclosure.
FIG. 3 shows a constant chord-wise cross-sectional view of the exemplary tip portion of FIG. 2, in accordance with one or more aspects of this disclosure.
FIGS. 4A-4C show constant chord-wise cross-sectional views of tip portions having different pressure side rail geometries, in accordance with one or more aspects of this disclosure.
FIG. 5A shows a view of an exemplary tip portion normal to the pressure side wall according to one example, where coolant exits pressure side flow channels through one or more slanted radial flow outlets, in accordance with one or more aspects of this disclosure.
FIG. 5B shows a view of an exemplary tip portion normal to the pressure side wall according to another example, where coolant exits pressure side flow channels through one or more slanted and/or diffusing radial flow outlets, in accordance with one or more aspects of this disclosure.
FIG. 5C shows a cut away perspective view of an exemplary tip portion that includes slanted and/or diffusing radial flow outlets as well as a suction side exit slot that directs coolant in a non-radial direction, in accordance with one or more aspects of this disclosure.
FIG. 6 shows another cut away perspective view of the tip portion of FIG. 2, in accordance with one or more aspects of this disclosure.
FIG. 7 is a flow diagram illustrating an example technique for manufacturing a dual walled airfoil, in accordance with one or more techniques of this disclosure

### DETAILED DESCRIPTION

The disclosure generally describes techniques and systems for workpiece holding during pECM. In general, the pECM process may impart a force on a workpiece being machined. This force may cause the workpiece to deflect away from the pECM tool, which may reduce accuracy and/or precision of the pECM process. In particular, when using pECM on an airfoil coversheet (described in more detail below) that is clamped at both ends, the force imparted by pECM may cause a span of the coversheet to deflect. In accordance with one or more aspects of this disclosure, a pECM system may include a backside support configured to support a span of a workpiece.

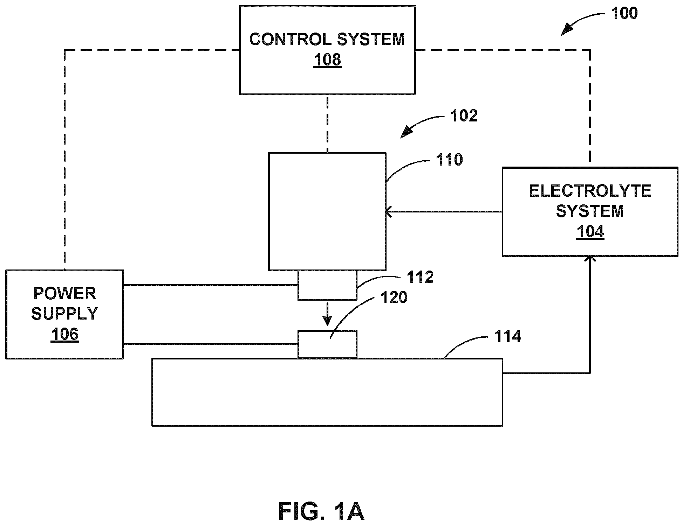

FIG. 1A is a schematic conceptual block diagram illustrating an example pulsed electrochemical machining (pECM) system 100 for machining a workpiece 120. pECM system 100 includes a mechanical system 102, an electrolyte system 104, a power supply 106, and a control system 108. While illustrated as separate components, the various components of pECM system 100 may be integrated with other components (e.g., power supply 106 incorporated into mechanical system 102) or overlap with other components (e.g., controllers of mechanical system 102 overlapping with control system 108). While examples of the disclosure are described primarily with regard to pulsed electrochemical machining processes performed by pECM system 100, other examples of the disclosure may be employed using other machining techniques that employ electrochemical machining to shape or otherwise selectively remove material from a workpiece.

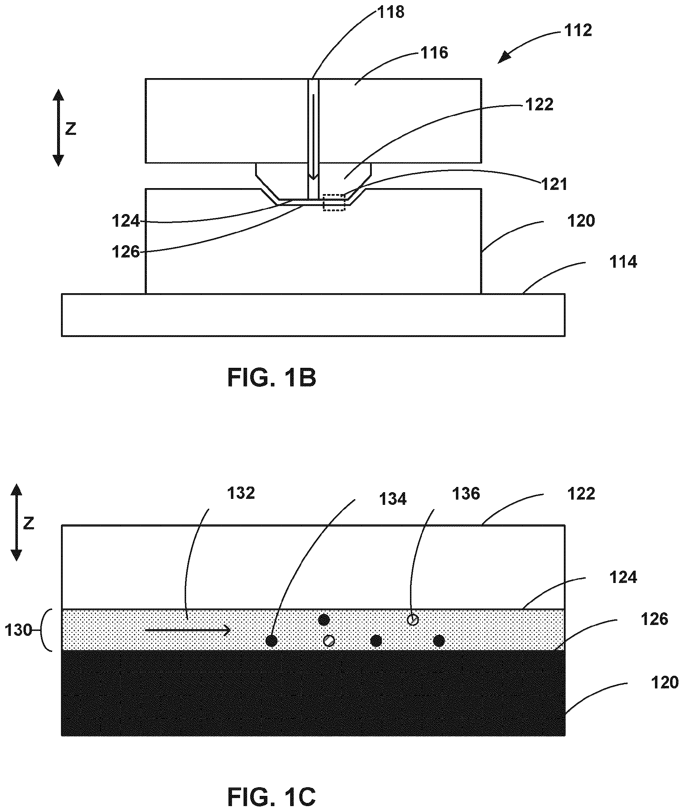

Mechanical system 102 may include an actuation system 110, a machining tool 112, and an enclosure system 114. Actuation system 110 may be configured to control a position of machining tool 112 relative to workpiece 120. During a pECM process, actuation system 110 may adjust the position of tool 112 relative to workpiece 120 as needed by moving tool 112, workpiece 120, or both. Actuation system 110 may include one or more actuators, such as direct drive actuators, configured to move tool 112 and/or workpiece 120 as desired during a pECM process. For examples, one or more actuators may be configured to feed or otherwise move machining tool 112 toward workpiece 120 during a pECM process. In some examples, actuation system 110 may be configured to oscillate machining tool 112 (e.g., along the z-axis shown in FIGS. 1B and 1C). Such movement of tool 112 by actuation system may improve removal of dissolved material and restore a concentration of electrolyte between machining tool 112 and workpiece 120. As illustrated in the example of FIG. 1A, mechanical system 102 may be configured to receive electrolyte from electrolyte system 104 and discharge the electrolyte to or proximate to machining tool 112.

Machining tool 112 may be configured to mechanically couple to actuation system 110 and electrically couple to power supply 106. For example, machining tool 112 may include one or more structures or assemblies to couple to actuation system 110, such that machining tool 112 receives a control force for positioning machining tool 112, electrolyte (if distributed via mechanical system 102) for discharging from machining tool 112, and electrical current for generating an electric potential between machining tool 112 and workpiece 120. As will be described further in FIGS. 1B and 1C below, machining tool 112 may be configured to define a working surface that, in combination with workpiece 120 and the electrolyte supplied by electrolyte system 104, forms an electrolytic cell that dissolves material from the outer surface of workpiece 120 using electrolysis.

Enclosure system 114 may be configured to mount workpiece 120 and electrically couple workpiece 120 to power supply 106 for generating a voltage between machining tool 112 and workpiece 120 (e.g., in the form of a pulsed direct current). For example, enclosure system 114 may position workpiece 120 toward machining tool 112, such that a working surface of workpiece 120 is exposed to a working surface of machining tool 112. In some examples, enclosure system 114 may capture spent electrolyte from workpiece 120 for return to electrolyte system 104. In some examples, enclosure system 114 may include one or more mechanical components configured to grip/hold workpiece 120 during the pECM process).

Electrolyte system 104 may be configured to condition and circulate electrolyte (e.g., liquid electrolyte) for distribution to a working surface of machining tool 112, such as via mechanical system 102. Electrolyte system 104 may include one or more pumps configured to discharge the electrolyte to mechanical system 102, one or more filters configured to filter contaminants from the electrolyte (e.g., for the re-use of electrolyte in the pECM process), one or more heat exchangers configured to remove heat from the electrolyte, and/or other components configured to maintain various parameters of the electrolyte.

Power supply 106 may be configured to generate an electric potential between machining tool 112 and workpiece 120. For example, power supply 106 may be configured to apply a voltage between machining tool 112 and workpiece 120 (e.g., between 2 volts and 20 volts) to generate current flow between machining tool 112 and workpiece 120 with the electrolyte flowing or otherwise present between machining tool 112 and workpiece 120. For a pulsed ECM process, power supply 106 may be configured to supply voltage in pulses, such as in combination with oscillations of machining tool 112 relative workpiece 120, to increase local current density. For example, power supply 106 may include a direct current (DC) source that applies a pulsed direct current to both machining tool 112 and
workpiece 120 during the pulse electrochemical machining process. In some examples, actuation system 110 may oscillate the position of machining tool 112 relative workpiece 120 in coordination with the pulsed direct current.

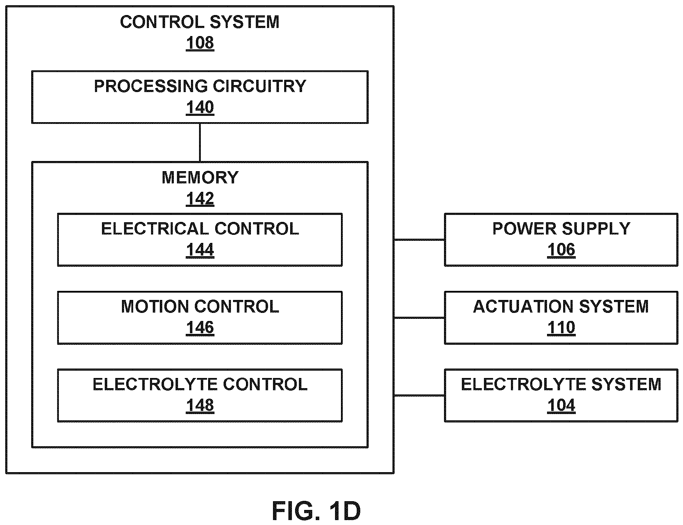

Control system 108 may be communicatively coupled to mechanical system 102, electrolyte system 104, and power supply 106, and configured to send control signals to mechanical system 102, electrolyte system 104, and power supply 106. For example, the control signals may cause mechanical system 102 to control (e.g., dynamically) a position of machining tool 112 relative to workpiece 120, cause electrolyte system 104 to supply electrolyte between machining tool 112 and workpiece 120, and cause power supply 106 to generate an electric potential between machining tool 112 and workpiece 120. Further operation of control system 108 will be described in FIG. 1D below.

Machining tool 112 defines a working surface that forms workpiece 120 into a component having a particular shape or set of dimensions (e.g., approximately the complimentary shape of machining tool 112). FIG. 1B is a side view cross-sectional conceptual diagram illustrating operation of machining tool 112 of pECM system 100 of FIG. 1A. Machining tool 112 includes a tool body 116 defining a tool axis that aligns with an axis of actuation system 110 of FIG. 1A. Tool body 116 includes one or more electrodes 122 (one or more cathodes). While illustrated in FIG. 1B as including a single electrode 122, tool body 116 may include multiple electrodes 122. Each electrode 122 defines a working surface 124 at a distal end of the tool axis. When machining tool 112 is attached to actuation system 110, each working surface 124 is configured to face a corresponding target surface 126 of workpiece 120. In some examples, such as illustrated in FIG. 1B, tool body 116 may include an electrolyte channel 118 configured to receive an electrolyte from electrolyte system 104 (e.g., via mechanical system 102) and discharge the electrolyte through one or more openings near working surface 124 of electrode 122.

Each electrode 122 includes an electrically conductive material at working surface 124. Likewise, workpiece 120 may be an electrically conductive material. When an electric potential (e.g., in the form of a pulse direct current) is generated between working surface 124 of electrode 122 and target surface 126 of workpiece 120 (e.g., with power supply under the control of control system 108), working surface 124 may form a cathode surface and target surface 126 may form an anode surface. As working surface 124 is advanced and material from workpiece 120 is removed, a shape of target surface 126 may generally correspond to the complimentary shape of working surface 124. While the shape of workpiece 120 is shown to mirror the shape of electrode 122 in FIG. 1B, in other examples, the dimensions and shape formed in workpiece 120 from the removal of material from workpiece 120 do not exactly mirror the shape of the tool 112.

The conductive materials of electrode(s) 122 and workpiece 120 may be any suitable conductive material such as metal, metal alloy, or ceramic material. Examples of metals that may be used to form the workpiece 120 and the electrode(s) 122 of tool 112 include nickel, iron, and titanium-based alloys in a variety of formats such as cast (including single crystal), forged, additively manufactured, and powdered metallurgy. Examples of suitable metals and metal alloys for the workpiece 120 and electrode(s) 122 of tool 112 include, but are not limited to, any superalloy such as CMSX-4, MarM247, Haynes 230, Rene N-5, MP35N, and the like, steels such as 4140, A2 tool steel, M4 tool steel, and gear steels such as Ferrium C64, Al 6061, Al 7075, brass, bronze, CoCr, Cu, Ge, Inconels such as 625, 718, and 740h, Mo, Ni, Nitinol, Nitronic 60, Pyrowear 53, stainless steels such as 17-4, 304, 316, and 440C, Ti Grade 1-5, Ti 64, TiAl, and mixtures and combinations thereof.

FIG. 1C is a side view cross-sectional conceptual diagram showing a magnified view within window 121 indicated in FIG. 1B to illustrate operating principles of the pECM tool of FIG. 1B. Working surface 124 of electrode 122 is positioned relative to target surface 126 of workpiece 120 to form an interelectrode gap 130, and an electrolyte 132 flows through interelectrode gap 130. When an electric potential (e.g., in the form of a pulse direct current) is generated between working surface 124 and target surface 126, current flows from working surface 124 to target surface 126 via electrolyte 132 to form an electrolytic cell. The current dissolves material at target surface 126 to generate electrochemical reaction products that include dissolved material 134, hydrogen gas 136, and heat. Electrolyte 132 carries away the electrochemical reaction products from interelectrode gap 130. In general, material removal rate may be related to current density in interelectrode gap 130. The current density in interelectrode gap 130 may be related to a variety of parameters including, but not limited to: spatial parameters, such as a distance of interelectrode gap 130; electrical parameters, such as an electric potential across interelectrode gap 130; electrolyte parameters, such as a flow rate of electrolyte 132; and other parameters that may affect flow of current from working surface 124 to target surface 126.

FIG. 1D is a conceptual block diagram illustrating an example control system 108 of pECM system 100 of FIG. 1A. Control system 108 includes processing circuitry 140 and a memory 142. Memory 142 includes computer-readable instructions that, when executed by processing circuitry 140, causes processing circuitry 140 to perform various functions related to control of components of pECM system 100. Processing circuitry 140 may include any one or more microprocessors, controllers, digital signal processors (DSPs), application specific integrated circuits (ASICs), field-programmable gate arrays (FPGAs), or equivalent discrete or integrated digital or analog logic circuitry, and the functions attributed to processing circuitry 140 herein may be embodied as software, firmware, hardware or any combination thereof. Memory 142 may include any volatile, non-volatile, magnetic, optical, or electrical media, such as a random access memory (RAM), read-only memory (ROM), non-volatile RAM (NVRAM), electrically-erasable programmable ROM (EEPROM), flash memory, or any other digital media.

Memory 142 may store any suitable information, including information for executing one or more electrochemical machining processes with which pECM system 100 performs on workpiece 120. For example, memory 142 may store one or more of electrical control instructions 144, motion control instructions 146, and electrolyte control instruction 148 in separate memories within memory 142 or separate areas within memory 142. Electrical control 144, motion control 146, and electrolyte control 148 may, in combination, define parameters that control pECM system 100 to remove material from workpiece 120 to generate a component having particular dimensions. In some examples, workpiece 120 may be a partially fabricated component having relatively rough dimensions, such that the pECM process may further refine workpiece 120 to relatively fine dimensions.

Electrical control 144 may define values for electrical parameters of a pECM process including, but not limited to, voltage amplitude applied to electrode 122 and workpiece 120, frequency of electric current, duty cycle (e.g., pulse length), current amplitude, and other electric parameters associated with control of current across interelectrode gap 130. Processing circuitry 140 may generate and send control signals that include the electrical parameters to electrical control circuitry of power supply 106.

Motion control 146 may define values for motion parameters of a pECM process including, but not limited to, feed rate of machining tool 112, position of machining tool 112 (e.g., depth limit of machining tool 112), frequency of oscillation of machining tool 112, amplitude of oscillation of machining tool 112, length of interelectrode gap 130, and other motion parameters associated with control of relative and/or time-varying position of working surface 124. Processing circuitry 140 may generate and send control signals that include the motion parameters to actuation circuitry of actuation system 110.

Electrolyte control 148 may define values for electrolyte parameters of a pECM process including, but not limited to, flow rate of electrolyte 132 through interelectrode gap 130, temperature of electrolyte 132, and other electrolyte parameters associated with conditions of electrolyte 132 in interelectrode gap 130. Processing circuitry 140 may generate and send control signals that include the electrolyte parameters to electrolyte control circuitry of electrolyte system 104.

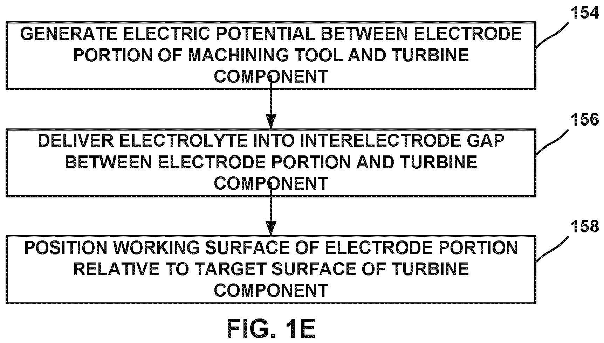

FIG. 1E is a flow diagram illustrating an example technique for controlling pECM system 100 of FIG. 1A. While illustrated sequentially, the various steps of FIG. 1E may be initiated in a different order (or sequentially) to remove material from a turbine component (e.g., workpiece 120). Control system 108 may cause power supply 106 to generate an electric potential between electrode 122 and workpiece 120 (154) and cause electrolyte system 104 to deliver electrolyte 132 into interelectrode gap 130 between working surface 124 of electrode 122 and target surface 126 of workpiece 120 (156) to form an electrolytic cell. Control system 108 may cause actuation system 110 to position working surface 124 of electrode 122 relative to target surface 126 of workpiece 120 (158) to control the size of interelectrode gap 130 and advance working surface 124 toward target surface 126 as material is removed from workpiece 120. In some examples, interelectrode gap 130 may be on the order of about 10 microns although other values are contemplated.

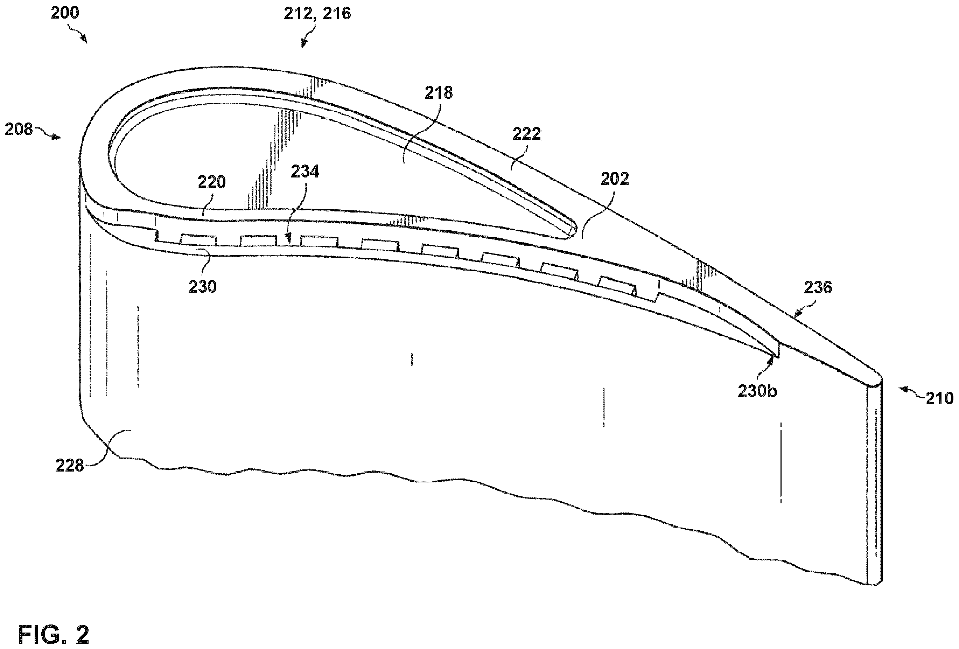

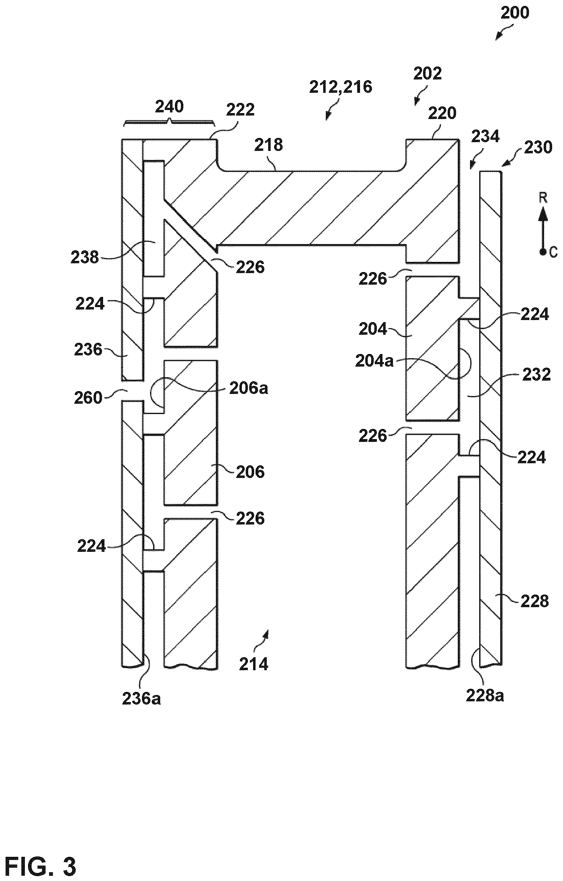

FIG. 2 shows a cut away view of an exemplary tip portion of an airfoil with dual wall cooling for a gas turbine engine, and FIG. 3 shows a cross-sectional view of the tip portion. The airfoil 200 includes a spar 202 having a pressure side wall 204 and a suction side wall 206 meeting at a leading edge 208 and at a trailing edge 210 of the airfoil. A tip 212 extends between the pressure and suction side walls 204, 206, and an interior of the spar 202 includes a coolant cavity 214. In this example, the tip 212 is a squealer tip 216 including a radially-recessed surface cavity 218 bounded by the pressure side wall 204 and the suction side wall 206. The portion of the pressure side wall 204 extending radially beyond the surface cavity 218 may be referred to as a pressure side rail 220, and the portion of the suction side wall 206 extending radially beyond the surface cavity 218 may be referred to as a suction side rail 222. Each of the pressure side wall 204 and the suction side wall 206 includes an arrangement of pedestals 224 on an outer surface 204a, 206a thereof and a plurality of cooling holes 226 in fluid communication with the coolant cavity 214.

A pressure side coversheet 228 overlies the pressure side wall 204 and terminates in a radial direction short of the tip 212, 216 of the spar 202 to form a shelf 230 extending along a chordal direction. An inner surface 228a of the pressure side coversheet 228 is in contact with the arrangement of pedestals 224 so as to define a flow pathway (or flow channels) 232 between the pressure side wall 204 and the pressure side coversheet 228. Consequently, coolant emerging from the cooling holes 226 impinges on the inner surface 228a of the coversheet 228 and follows the flow pathway 232 determined by the arrangement of pedestals 224 on the spar 202. The flow channels 232 are configured to direct coolant from the cooling holes 226 to radial flow outlets 234 adjacent to the shelf 230. When the term "radial" is used as a modifier for "flow outlets" or "coolant outlets," the outlets may be understood to be radially directed or radially aligned in the direction of the tip, where the radial direction R is shown in FIG. 3. The shelf 230 may extend in the chordal (or chord-wise) direction C, also shown in FIG. 3, from at or near the leading edge 208 to a pressure-side location 230b short of the trailing edge 210. In other words, the shelf 230 may extend from at or near the stagnation point 208, where the mainstream flow velocity is zero, to the pressure-side location 230b.

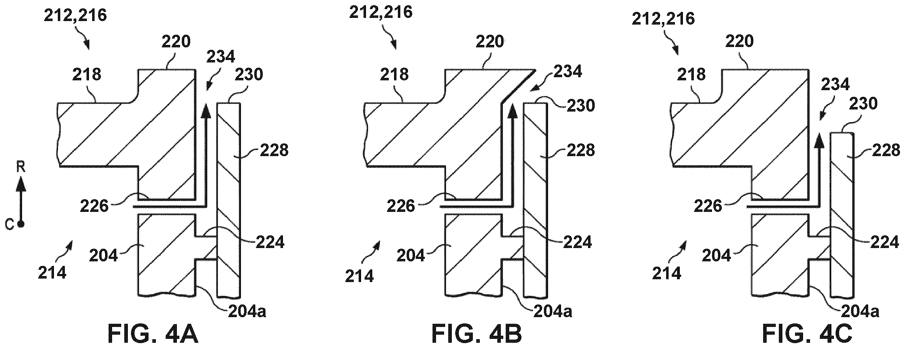

As can be seen from the constant chord-wise cross-sectional views of FIGS. 4A-4C, coolant may be ejected from the radial flow outlets 234 in a radial direction toward the tip 212,216, thereby effectively cooling the tip. The radial direction may be understood to be substantially parallel to the outer surface 204a of the pressure side wall 204. In addition to the radial flow outlets 234, coolant may be ejected from the flow channels 232 through additional holes in the pressure side coversheet 228.

It should be noted that when a structure (e.g., shelf 230, pressure side rail 220, suction side rail 222, etc.) is described as being disposed "near the [position]" or "short of the [position]," where [position] may be substituted with leading edge, trailing edge, or another location, it may be understood that the structure is disposed a distance d or less from the [position], where the distance d is equal to 20% of the total length from the leading edge 208 to the trailing edge 210, as measured along a centerline of the tip 212.

As shown in FIGS. 4B and 4C, the pressure side rail 220, which is adjacent to the radially-recessed surface cavity 218, may have an increased thickness compared to the portion of the pressure side wall 204 that lies adjacent to the coolant cavity 214. In one example, the pressure side rail 220 may flare outward, as shown in FIG. 4B, thereby increasing in thickness along the radial direction. In another example shown in FIG. 4C, the increased thickness may be due to the incorporation of additional material on an inner surface (i.e., the surface facing the surface cavity 218) of the pressure side rail 220. Such configurations may be beneficial to provide additional surface area on the rail 220 for abrasive coating applications.

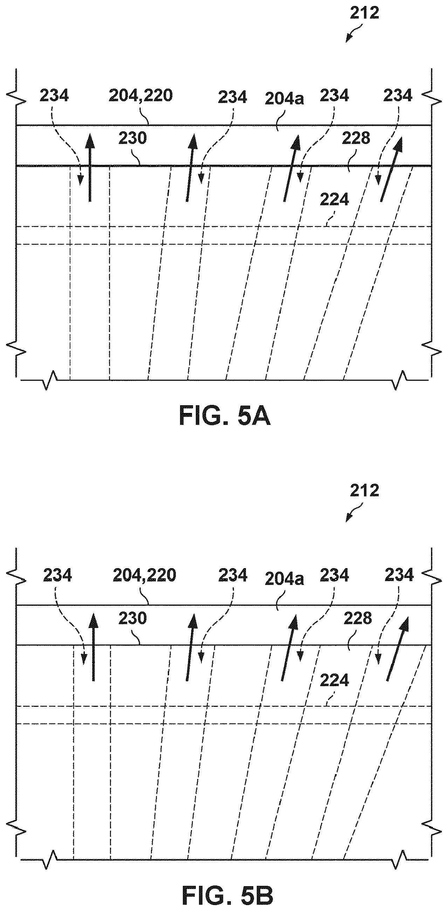

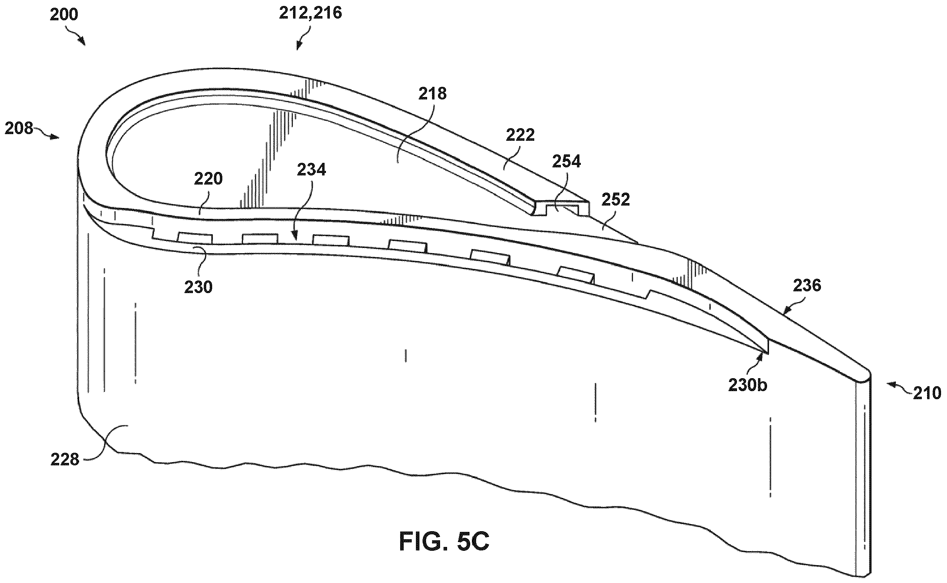

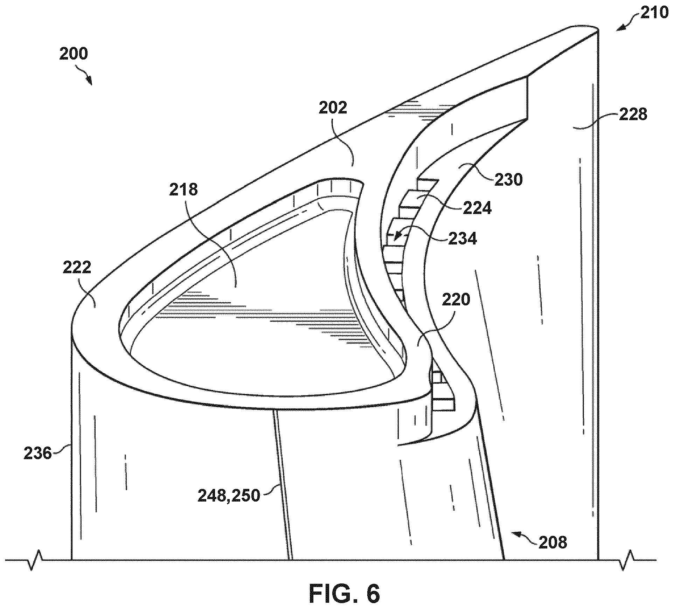

As can be seen in FIG. 3 and 6, the suction side coversheet 236 may extend full-span in the radial direction and terminate at the tip 212 of the spar, thereby forming a dual-wall structure 240 with the suction side rail 222. In such an example, the coolant circuit 238 may be designed to direct the coolant from cooling holes 226 in the suction side wall 206 through one or more exit holes 260 in the suction side coversheet 236 and/or through one or more exit slots at or near the trailing edge 210. The cooling holes 226 in the suction side wall 206 in fluid communication with the coolant cavity 214 may be directed normal to the wall 206 or in an off-normal direction. For example, depending on the depth of the surface cavity 218, one or more of the cooling holes 226 may be slanted within the suction side wall 206 in order to access the portion of the coolant circuit 238 adjacent to the suction side rail 222, as shown in FIG. 3. The flow passing through this portion of the coolant circuit 238 may exit through exit holes 260 in the suction side coversheet 236 and enter the mainstream flow upstream of where it enters the coolant circuit 238 (counter-flow), downstream of where it enters the coolant circuit 138 (co-flow) or radially inward from where it enters the coolant circuit 238. In the co-flow configuration, the coolant may also or alternatively travel to the exit slot(s) at or near the trailing edge 210 to provide cooling. For example, referring again to FIG. 5C, an exemplary exit slot 254 in the suction side rail 222 is shown for a configuration in which there is a break in-or termination point of-the suction side rail 222. The break or termination point in the suction side rail 222 creates a suction side exit 252 from the surface cavity 218 and also provides a location for the exit slot 254. The exit slot 254 directs flow in a chordal direction from the coolant circuit 238 onto the surface cavity 218, promoting cooling of the tip 212,216 and the trailing edge 210. The break or termination point in the suction side rail 222 may be located near the trailing edge 210. Generally speaking, in contrast to the radial flow outlets 234 on the pressure side of the airfoil 200, exit holes or slots on the suction side or at the trailing edge 210 of the airfoil 200 may direct the coolant in a non-radial direction, e.g., in a direction transverse to the radial direction, such as in a chordal direction, and/or in an outward or normal direction (e.g., with respect to the suction side wall 206 of the airfoil 200). Thus, the exit holes or slots on the suction side (e.g., in the suction side rail 222 or suction side coversheet 236) or at the trailing edge 210 of the airfoil 200 may be described as non-radial coolant outlets.

As noted above, one or more coversheets and a spar may collectively form a dual walled airfoil. For instance, airfoil 200 may be formed of pressure side coversheet 228, suction side coversheet 236, and spar 202. The one or more coversheets and the spar may be bonded together. For instance, one or more bond surfaces of pressure side coversheet 228 may be attached to one or more bond surfaces of spar 202. Similarly, one or more bond surfaces of suction side coversheet 236 may be attached to one or more bond surfaces of spar 202. Any suitable bond process may be utilized. In one specific example a diffusion bond process may be used to attach a coversheet to a spar.

In general, bond surfaces may be locations on coversheets and spars that are bonded together. In some examples, tips of pedestals on the coversheets (e.g., pedestals 224), and corresponding location on spar 202 may be bond surfaces.

The aforementioned coversheets and spar may be formed from any suitable material. Example materials include, but are not limited to, Nickel superalloys such as CMSX-4. The nickel superalloy may have a composition including Chromium (e.g., about 5.5 wt% to about 7.5 wt%), Cobalt (e.g., about 9 wt% to about 11 wt%), Molybdenum (e.g., about 0.3 wt% to about 0.9 wt%), Tungsten (e.g., about 5 wt% to about 7 wt%)e.g., with the balance being nickel. In some examples, such a nickel superalloy may also include Titanium (e.g., about 0.5 wt% to about 1.5 wt%), Titanium (e.g., about 0.5 wt% to about 1.5 wt%), Hafnium (e.g., about 0 wt% to about 0.2 wt%), Tantalum (e.g., about 5.5 wt% to about 6.5 wt%), Tantalum (e.g., about 5.5 wt% to about 6.5 wt%), Rhenium (e.g., about 2 wt% to about 4 wt%), and/or Rhenium (e.g., about 2 wt% to about 4 wt%) in trace amounts.

Coversheets and spars may have complex 3D profiles and different shapes/sizes may be used in a single gas-turbine engine. For instance, coversheets and spars for compressor/turbine blades in different stages may have different shapes. Such variation introduces various manufacturing complexities.

In accordance with one or more aspects of this disclosure, a pECM system may machine features into a turbine component (e.g., machine three-dimensional features into spar 202, pressure side coversheet 228 and/or suction side coversheet 236). As one example, pECM system 100 of FIG. 1A may remove material from pressure side coversheet 228 to form a cooling pattern (e.g., a pattern to facilitate fluid flow and/or heat transfer). As another example, pECM system 100 of FIG. 1A may remove material from spar 202 to form a bond surface. As another example, pECM system 100 of FIG. 1A may remove material from a coversheet to form a bond surface and/or an aero side surface of the coversheet. While described with respect to machining features into a coversheet, the techniques of this disclosure are not so limited. For instance, pECM system 100 of FIG. 1A may remove material from spar components (e.g., spar 202) to form cooling pattern geometry.

Performing pECM on a turbine component may provide several advantages over other techniques. As one example, as compared to casting, pECM may allow for design changes later in development cycles and/or simplified testing of various designs (e.g., without expensive tooling changes). As another example, pECM may provide more control of L/D type features (e.g., deep and narrow features), which may be conducive to improved heat transfer. As another example, pECM may be beneficial for turbine components formed of single crystal materials (e.g., avoid errant grain).

As noted above, pECM system 100 may machine three-dimensional features into a turbine component. Some example three-dimensional features include, but are not limited to, connected channels (e.g., one single passageway with many fingers, similar to a rib cage), labyrinths to cross channels (e.g., pressure side to suction side), dams in trailing edge with slots to dissipate out trailing edge, discrete pedestals, flow directors/dams (e.g., to shroud inlet air as passes from core to outlet), swirling features, features on backside of coversheet (e.g., as opposed to or in addition to features on spar), entry and exit shapes (e.g., holes, slots, tunnels, crows feet, Coanda ramps, 3D ditches (e.g., with different depths and/or directions).

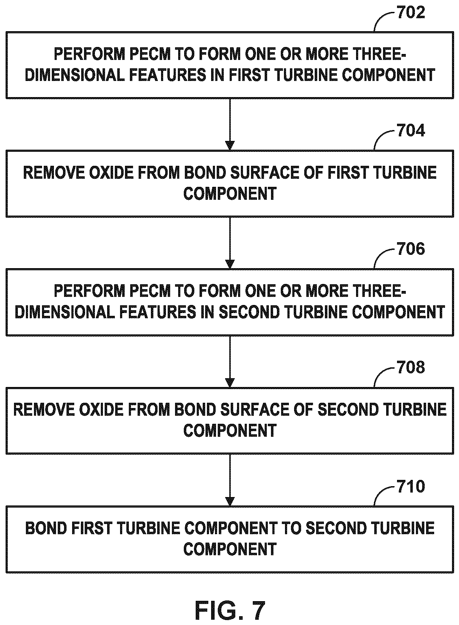

FIG. 7 is a flow diagram illustrating an example technique for manufacturing a dual walled airfoil, in accordance with one or more techniques of this disclosure. The technique of FIG. 7 may be performed, at least in part, via pECM system 100 of FIG. 1A. While illustrated sequentially, the various steps of FIG. 7 may be initiated in a different order (or sequentially) to form a dual walled airfoil (e.g., airfoil 200).

pECM system 100 may perform pECM to form one or more three-dimensional features in a first turbine component (702). For instance, pECM system 100 may remove material from coversheet 228 to form a cooling pattern and/or bonding surfaces. Performance of pECM may result in an oxide layer on the first turbine component. The presence of such an oxide layer may be undesirable as the oxide layer may inhibit or degrade bonding.

In accordance with one or more techniques of this disclosure, oxide may be removed from the first turbine component. In some examples, oxide may be removed from the entirety of the first turbine component. In other examples, oxide may only be removed from a portion of the first turbine component. For instance, oxide may be removed from at least a bond surface of the first turbine component (704).

pECM system 100 may perform pECM to form one or more three-dimensional features in a second turbine component (706). For instance, pECM system 100 may remove material from spar 202 to form a cooling pattern and/or bonding surfaces. Similar to the first turbine component, oxide may be removed from at least bond surfaces of the second turbine component (708).

The first turbine component may be bonded to the second turbine component (710). For instance, bond surfaces of the first turbine component may be attached to bond surfaces of the second turbine component via a diffusion bonding process.

While described above as both being processed via pECM, the techniques of this disclosure are equally applicable to manufacturing dual walled airfoils where the second turbine component is not processed via pECM. For instance, a coversheet machined using pECM may be bonded to a spar that is not machined using pECM.

As discussed above, oxide may be removed from a turbine component that was machined using pECM. Example oxide removal techniques include, but are not limited to, acid pickling (e.g., placing a pECM processed turbine component in acid for a period of time), tumbling media (e.g., placing a pECM processed turbine component in a grit material, such as silicone carbide, aluminum oxide, garnet, etc.), grit blasting (e.g., (e.g., spraying an abrasive material at a pECM processed turbine component), dry ice blasting (e.g., directing particles of dry ice from a nozzle using a stream of compressed air at target surfaces of the turbine component), steel/wire brush (e.g., rubbing a steel or wire brush against a pECM processed turbine component), milling (e.g., using a mill to remove material from a bond surface of a pECM processed turbine component), and reverse polarity pECM (e.g., delivering, by pECM system 100, pulsed direct current to the turbine component at a polarity that is opposite that previously used (e.g., anodes become cathodes and vice versa)). Reverse polarity pECM may provide an advantage in that the turbine component may not require further oxide removal after being removed from pECM system 100.

As described above, pECM system 100 may perform pECM to machine a workpiece, such as a turbine component. Some parameters that may be used by pECM system 100 include, but are not limited to, those in the following table:

**pECM Parameter Range Table**

| **Parameter** | **Range** |
|---|---|
| **Voltage (V)** | 2-20 |
| **Feed Rate (mm/min)** | .030 - 2 |
| **Frequency (Hz)** | 20-100 |
| **Pulse Width (ms)** | 0-5 |
| **Phase (%)** | 30-160 |
| **Pressure (kPa)** | 100-1000 |
| **Off Time Voltage (V)** | 0.6-1.6 |
| **Off Time Amperage (mA)** | 500 6000 |
| **Negative Voltage (V)** | 0-5 |
| **Neg Pulse Width (ms)** | 0-10 |
| **pH** | 4-12 |
| **Electrolyte Conductivity (mS/cm)** | 40-180 |

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in an article of manufacture including a computer-readable storage medium encoded with instructions. Instructions embedded or encoded in an article of manufacture including a computer-readable storage medium encoded, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, a computer-readable storage medium may include a non-transitory medium. The term "non-transitory" may indicate that the storage medium is not embodied in a carrier wave or a propagated signal. In certain examples, a non-transitory storage medium may store data that can, over time, change (e.g., in RAM or cache).

Various aspects and embodiments may be understood with reference to the following numbered clauses:
1. A method for pulsed electrochemical machining (pECM) a turbine component, comprising:
   generating a pulsed direct current between one or more electrodes of a machining tool and the turbine component, wherein the machining tool comprises a tool body defining a tool axis, the tool body comprising the one or more electrodes, each of the one or more electrodes comprising an electrically conductive material and defining a working surface at a distal end of the tool axis configured to face the turbine component;
      delivering an electrolyte into an interelectrode gap between the working surface of the one or more electrodes and a target surface of the turbine component; and
   positioning the working surface of the one or more electrodes relative to the target surface of the turbine component to remove material from the target surface of the turbine component.
2. The method of clause 1, wherein the turbine component comprises either a coversheet or a spar an airfoil.
3. The method of clause 1 or 2, wherein positioning the working surface of the one or more electrodes relative to the target surface of the turbine component to remove material from the target surface of the turbine component comprises forming a cooling pattern in the turbine component.
4. The method of clause 1 or 2, wherein positioning the working surface of the one or more electrodes relative to the target surface of the turbine component to remove material from the target surface of the turbine component comprises forming a bond surface on the turbine component.
5. The method of any one of clauses 1 to 4, wherein positioning the working surface of the one or more electrodes relative to the target surface of the turbine component to remove material from the target surface of the turbine component comprises forming a three-dimensional feature in the turbine component.
6. The method of any one of clauses 1 to 5, further comprising:
   removing an oxide layer from at least a first portion of the turbine component, the oxide layer formed as a result of performing pECM.
7. The method of clause 6, wherein the first portion of the turbine component comprises a bond surface of the turbine component, and wherein removing the oxide layer comprises:
   removing the oxide layer from the bond surface.
8. The method of clause 7, the method further comprising:
   not removing the oxide layer from at least a second portion of the turbine component.
9. The method of any one of clauses 6 to 8, wherein generating the pulsed direct current between the one or more electrodes of the machining tool and the turbine component comprises generating a first pulsed direct current with a first polarity, and wherein removing the oxide layer comprises:
   generating, with a second polarity that is opposite the first polarity, a second pulsed direct current between the one or more electrodes of the machining tool and the turbine component.
10. The method of any one of clauses 1 to 9, wherein generating the pulsed direct current comprises:
   generating the pulsed direct current with a voltage between 2 volts and 20 volts.
11. The method of any one of clauses 1 to 10, wherein the turbine component is formed of a Nickel superalloy.
12. The method of clause 11, wherein the Nickel superalloy comprises CMSX-4.
13. A method for manufacturing dual walled airfoils, the method comprising:
   performing pulsed electrochemical machining (pECM) to form one or more three-dimensional features in a first turbine component;
   removing oxide from at least a bond surface of the first turbine component; and
   bonding the first turbine component with a second turbine component to form a dual walled airfoil.
14. The method of clause 13, further comprising:
   performing pECM to form one or more three-dimensional features in the second turbine component.
15. The method of clause 13 or 14, wherein the first turbine component comprises a coversheet and the second turbine component comprises a spar.
16. The method of clause 15, wherein bonding comprises:
   diffusion bonding the bond surface of the coversheet to a bond surface of the spar.
17. The method of clause 16, further comprising:
   removing, prior to diffusion bonding, oxide from at least the bond surface of the spar.
18. The method of any one of clauses 13 to 17, wherein the dual walled airfoil comprises a turbine blade of a gas-turbine engine.
19. A system comprising:
   means for performing pulsed electrochemical machining (pECM) to form one or more three-dimensional features in a first turbine component;
   means for removing oxide from at least a bond surface of the first turbine component; and
   means for bonding the first turbine component with a second turbine component to form a dual walled airfoil.
20. The system of clause 19, wherein the dual walled airfoil comprises a turbine blade of a gas-turbine engine.

Various examples have been described. These and other examples are within the scope of the following claims.

## Claims

1. A method for pulsed electrochemical machining (pECM) a turbine component, comprising:
generating a pulsed direct current between one or more electrodes of a machining tool and the turbine component, wherein the machining tool comprises a tool body defining a tool axis, the tool body comprising the one or more electrodes, each of the one or more electrodes comprising an electrically conductive material and defining a working surface at a distal end of the tool axis configured to face the turbine component;
delivering an electrolyte into an interelectrode gap between the working surface of the one or more electrodes and a target surface of the turbine component; and
positioning the working surface of the one or more electrodes relative to the target surface of the turbine component to remove material from the target surface of the turbine component.

2. The method of claim 1, wherein the turbine component comprises either a coversheet or a spar an airfoil.

3. The method of claim 1 or claim 2, wherein positioning the working surface of the one or more electrodes relative to the target surface of the turbine component to remove material from the target surface of the turbine component comprises forming a cooling pattern in the turbine component.

4. The method of claim 1 or claim 2, wherein positioning the working surface of the one or more electrodes relative to the target surface of the turbine component to remove material from the target surface of the turbine component comprises forming a bond surface on the turbine component.

5. The method of any of claims 1-4, wherein positioning the working surface of the one or more electrodes relative to the target surface of the turbine component to remove material from the target surface of the turbine component comprises forming a three-dimensional feature in the turbine component.

6. The method of any of claims 1-5, further comprising:
removing an oxide layer from at least a first portion of the turbine component, the oxide layer formed as a result of performing pECM.

7. The method of claim 6, wherein the first portion of the turbine component comprises a bond surface of the turbine component, and wherein removing the oxide layer comprises:
removing the oxide layer from the bond surface.

8. The method of claim 7, the method further comprising:
not removing the oxide layer from at least a second portion of the turbine component.

9. The method of any one of claims 6 to 8, wherein generating the pulsed direct current between the one or more electrodes of the machining tool and the turbine component comprises generating a first pulsed direct current with a first polarity, and wherein removing the oxide layer comprises:
generating, with a second polarity that is opposite the first polarity, a second pulsed direct current between the one or more electrodes of the machining tool and the turbine component.

10. The method of any of claims 1-9, wherein generating the pulsed direct current comprises:
generating the pulsed direct current with a voltage between 2 volts and 20 volts.

11. The method of any of claims 1-10, wherein the turbine component is formed of a Nickel superalloy.

12. A method for manufacturing dual walled airfoils, the method comprising:
performing pulsed electrochemical machining (pECM) to form one or more three-dimensional features in a first turbine component;
removing oxide from at least a bond surface of the first turbine component; and
bonding the first turbine component with a second turbine component to form a dual walled airfoil.

13. The method of claim 12, further comprising:
performing pECM to form one or more three-dimensional features in the second turbine component.

14. The method of claim 12 or 13, wherein the first turbine component comprises a coversheet and the second turbine component comprises a spar.

15. The method of claim 14, wherein bonding comprises:
diffusion bonding the bond surface of the coversheet to a bond surface of the spar, the method further comprising:
removing, prior to diffusion bonding, oxide from at least the bond surface of the spar.
